Europäisches Patentamt

European Patent Office

Office européen des brevets

(19)

(11) Numéro de publication : **0 128 842 B1**

# FASCICULE DE BREVET EUROPÉEN

(12)

(45) Date de publication du fascicule du brevet :
04.05.88

(21) Numéro de dépôt : 84401214.6

(22) Date de dépôt : 14.06.84

(51) Int. Cl.⁴ : **C 03 B 27/04**

(54) **Perfectionnement à la trempe du verre.**

(30) Priorité : 14.06.83 FR 8309841

(43) Date de publication de la demande :
19.12.84 Bulletin 84/51

(45) Mention de la délivrance du brevet :
04.05.88 Bulletin 88/18

(84) Etats contractants désignés :
BE DE FR GB IT LU NL SE

(56) Documents cités :
US-A- 3 672 861

(73) Titulaire : **SAINT-GOBAIN VITRAGE**
**Les Miroirs 18, avenue d'Alsace**
**F-92400 Courbevoie (FR)**

(72) Inventeur : **Letemps, Bernard**
**5 avenue du Gros Buisson**
**F-60150 Thourotte (FR)**
Inventeur : **Colmon, Daniel**
**6 Place du Colonel Fabien**
**F-60150 Thourotte (FR)**

(74) Mandataire : **Leconte, Jean-Gérard et al**
**Saint-Gobain Recherche 39, Quai Lucien Lefranc**
**F-93304 Aubervilliers Cedex (FR)**

EP 0 128 842 B1

## Description

La présente invention se rapporte à la trempe du verre à l'air, plus spécialement dans des installations de trempe à plat où le verre défile à l'horizontale, et elle est plus particulièrement adaptée à la trempe du verre mince, c'est-à-dire d'épaisseur de l'ordre de 2 mm et moins.

A l'heure actuelle et de façon habituelle, on réussit à tremper des volumes de verre suffisamment pour qu'ils satisfassent aux réglementations en matière de vitrage automobile (notamment règlement n° 43 résultant de l'accord des Nations Unies sur les conditions uniformes d'homologation et la reconnaissance réciproque de l'homologation des équipements et pièces de véhicules à moteur) tant que leur épaisseur n'est pas inférieure à 3 mm.

Les réglementations requièrent qu'après fracture du vitrage, le nombre de fragments de verre contenus dans un carré de 5 cm × 5 cm à plus de 7,5 cm du point d'impact soit compris entre 40 et 350, les fragments ne dépassent pas 3 cm² en surface, sauf éventuellement dans un rayon de 7,5 cm autour du point d'impact, les fragments de forme allongée qui peuvent exister n'aient pas plus de 7,5 cm de longueur.

Pour obtenir ces résultats, sur des feuilles à haute température, défilant à plat, on souffle de l'air à vitesse de l'ordre de 200 m/s avec des débits pouvant aller jusqu'à 1 200 m³ par m² de verre et par minute (ces 1 200 m³ étant pris dans des conditions normales de température et de pression).

Généralement, comme décrit dans le document de brevet US-A-3 672 861 on souffle cet air sur les deux faces du verre à l'aide de simples buses tubulaires.

Pour améliorer les performances, on a cherché à augmenter le débit d'air, mais on est limité dans cette voie car il ne suffit pas de souffler de l'air, encore faut-il pouvoir l'évacuer ensuite, sans perturber le soufflage, quelles que soient les dimensions des vitrages traités. En effet, dans les installations actuelles, la surface encombrée par des rouleaux ou galets de support du verre, des buses et en général par tous les équipements, représente environ 60 % de la surface totale, la surface occupée par l'air de soufflage incident est de l'ordre de 5 %, si bien qu'il ne reste environ que 35 % de surface libre pour évacuer l'air, et avec lui les calories enlevées au verre et ce pourcentage de 35 % constitue une limite inférieure qu'on ne peut pas dépasser sous peine de mauvaise évacuation et de perturbation du soufflage, donc d'inefficacité du refroidissement. Toute augmentation du débit soufflé augmenterait l'encombrement dû aux buses et à l'air incident et donc réduirait encore la surface prévue pour l'évacuation alors que le volume d'air à évacuer serait encore plus important.

On a également cherché à faire varier les jets d'air dans le temps et dans l'espace (pulsation des jets, oscillation des dispositifs de soufflage) ou à surdensifier le soufflage dans certaines zones (alternance de bandes à trempe forte et de bandes à trempe plus faible). Mais cela a essentiellement permis d'obtenir de façon plus certaine des vitrages sans aiguilles, c'est-à-dire sans fragments de plus de 7,5 cm de longueur, au prix d'une complication des moyens mis en œuvre.

D'autre part, sachant que l'échange thermique entre l'air et le verre à refroidir est approximativement proportionnel à la vitesse de cet air, on a également cherché à augmenter la pression d'alimentation des buses de soufflage pour tenter d'obtenir des vitesses d'air plus importantes. On a ainsi appliqué des pressions qui autorisent des vitesses soniques, voire supersonique. Au prix d'une importante dépense d'énergie, on a pu améliorer un peu les performances et réussir à tremper des feuilles de verre de 2,5 mm d'épaisseur, mais on ne peut toujours pas tremper correctement, c'est-à-dire suffisamment pour répondre aux réglementations sur les vitrages automobiles, du verre de l'ordre de 2 mm d'épaisseur, ni même dans des conditions économiques satisfaisantes et compatibles avec une fabrication industrielle, du verre d'épaisseur inférieure à 3 mm d'épaisseur.

La présente invention vise à remédier à ces inconvénients et à fournir des feuilles de verre correctement trempées, de faible épaisseur, de l'ordre de 2 mm et moins, avec des coûts de fabrication compatibles avec une fabrication industrielle. Elle vise également à fournir des feuilles de verre correctement trempées, d'épaisseur plus importante que 2 mm, mais dans des conditions économiques plus intéressantes que celles dans lesquelles elles sont aujourd'hui fabriquées.

Elle propose pour cela de souffler sur le verre un gaz, en général de l'air, à l'aide de buses aboutissant près du verre, sur ses deux faces, ces buses ayant leur extrémité libre proche du verre resserrée avec seulement un orifice de sortie étroit, de façon que le maximum de perte de charge rencontré par le gaz sur son trajet se trouve à l'extrémité libre desdites buses.

Avantageusement les buses sont alimentées sous une pression qui autorise une vitesse au moins sonique du gaz à leur sortie.

Les buses ainsi conformées, l'onde ou éventuellement les ondes de choc multiples produite(s) s'attache(nt) à l'extrémité libre desdites buses. On garantit ainsi que la vitesse élevée de l'air, nécessaire à un haut pouvoir de refroidissement, est effectivement obtenue au niveau du verre et que l'énergie dépensée pour alimenter les buses n'est pas dégradée inutilement par des pertes de charge mal placées ou des interactions entre ondes de choc multiples.

Avantageusement, elle propose d'augmenter les possibilités d'échappement de l'air soufflé par diverses mesures, notamment en remplaçant les rouleaux classiques de support des feuilles de verre par des galets moins encombrants, et/ou en utilisant des buses tubulaires, longues, d'autant plus longues que le poste de trempe est plus large et/ou que le volume d'air par unité de surface est plus important.

Grâce à l'invention on peut obtenir dans des conditions économiques intéressantes des vitrages très minces, 2 mm et moins, et à fortiori des vitrages plus épais, suffisamment trempés pour répondre aux réglementations automobiles.

L'invention sera maintenant expliquée plus en détail en se référant aux dessins qui représentent :

Figure 1 : un schéma d'une installation de trempe à plat.

Figure 2 : une coupe schématique d'une buse de soufflage.

Figure 3 : différentes séries de buses groupées :

3A une série essentiellement destinée à être intercalée entre les galets.

3B une série régulière

3C une autre série destinée à être intercalée entre les galets.

3D une autre série régulière dense.

Figure 4 : différentes configurations de postes de trempe :

4A une configuration autorisant la trempe de feuilles de verre ayant 2,6 mm d'épaisseur, et plus.

4B une configuration utilisant les mêmes séries de buses que précédemment, mais un autre espacement des moyens supportant le verre.

4C une configuration dans laquelle la densité des buses de soufflage est augmentée.

4D une configuration permettant la trempe du verre de 1,6 mm d'épaisseur.

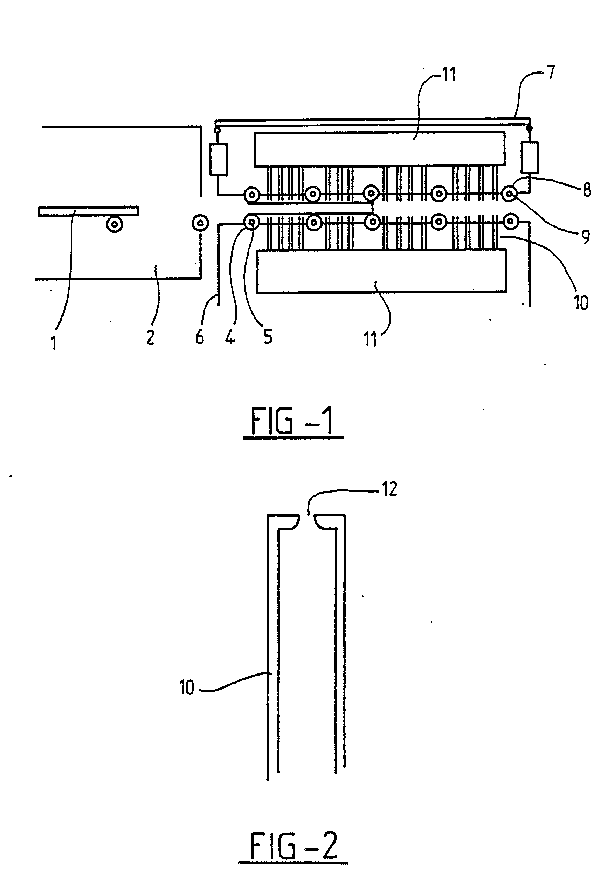

La figure 1 est une vue schématique d'une installation de trempe à plat de feuilles de verre, suivant l'invention. Des feuilles de verre 1 délivrées à haute température, de l'ordre de 650 °C par dispositifs amont 2, four de réchauffage du verre ou four de flottage, défilent à plat dans le poste de trempe 3 sur des séries de galets 4 montés sur des axes 5 entraînés en rotation et portés par un châssis inférieur 6. Un châssis supérieur 7 réglable en hauteur par rapport au châssis inférieur 6 supporte des axes tournants 8 équipés également de galets 9 de maintien des feuilles de verre. En position de travail, le châssis supérieur 7 est abaissé comme montré fig. 1, de façon à laisser entre les galets inférieurs 4 et les galets supérieurs 9, seulement l'espace nécessaire au passage des feuilles de verre 1, les galets supérieurs 9 maintenant alors lesdites feuilles de verre appliquées sur les galets inférieurs 4.

Entre les axes (5, 8) et les galets (4, 9) des châssis inférieur 6 et supérieur 7, sont intercalées des buses 10 de soufflage disposées verticalement, alimentées en un gaz sous pression, généralement de l'air, par l'intermédiaire de canalisations diverses reliées à des caissons 11 maintenus sous pression. Ces buses 10 avantageusement sont du type de celle montrée figure 2, à savoir des tubes cylindriques creux ayant environ 4 à 6 mm de diamètre, et une longueur au moins égale à 8 fois et de préférence 10 à 25 fois ce diamètre, dont l'extrémité libre c'est-à-dire celle située à proximité du verre est refermée et seulement percée d'un orifice 12 calibré étroit, par exemple de 1,5 mm de diamètre, avec des bords chanfreinés de telle sorte que le coefficient de striction avoisine 1.

La longueur des buses peut varier, tout en conservant une longueur suffisante pour stabiliser l'écoulement de l'air. Elles peuvent être allongées pour améliorer l'évacuation de l'air soufflé entre elles après impact sur le verre repoussant ainsi plus loin l'obstacle à l'évacuation que constituent les caissons 11. Elles seront d'autant plus longues que le poste de trempe sera plus important, en largeur en particulier, pour tremper de grandes feuilles de verre, et/ou que les débits d'air soufflé seront plus importants.

Ces buses 10 seront disposées pour avoir leur extrémité libre près du verre, à une distance qui de préférence sera de l'ordre de 6 fois le diamètre de leur orifice de sortie 12 de façon à conserver une vitesse d'impact de l'air sur le verre, importante, aussi peu différente que possible de la vitesse à la sortie de la buse. Des distances entre l'extrémité libre des buses et le verre de 5 à 15 mm et de préférence de 5 à 8 mm seront couramment choisies, tant au-dessus qu'en dessous du verre.

Des portions de rangées transversales ou même des rangées entières de buses tubulaires peuvent éventuellement être remplacées par des buses à fente, l'orifice de sortie en forme de fente étant étroit, calibré, à bords chanfreinés et les caractéristiques dimensionnelles desdites buses à fente étant telles que le maximum de perte de charge rencontré par le gaz de trempe sur son trajet se trouve à l'extrémité étroite de sortie. Ces caractéristiques dimensionnelles à savoir largeur du corps de buse, relation entre hauteur de buse et largeur de la fente de sortie, largeur de la fente de sortie, distance par rapport au verre seront du même type que pour les buses tubulaires c'est-à-dire par exemple respectivement 4 à 6 mm de largeur pour le corps de buse, une hauteur d'au moins 8 fois et de préférence de 10 à 25 fois la largeur, 1,5 mm de largeur de fente, distance par rapport au verre qui n'excède pas 6 fois la largeur du jet de gaz à sa sortie. Avec de telles buses à fente, les possibilités d'échappement de l'air soufflé sont un peu moins bonnes qu'avec des buses tubulaires, mais par contre on peut fournir une quantité d'air de trempe un peu plus importante ce qui peut être intéressant en particulier au début du poste de trempe.

Pour permettre une vitesse sonique d'éjection de l'air, ces buses 10 tubulaires ou éventuellement à fente sont alimentées en air sous une pression relative au moins égale à 0,9 bar.

Il est bien entendu possible d'obtenir à la sortie de ces buses un air à vitesse supersonique en les alimentant sous une pression plus élevée, mais pour éviter des dépenses d'énergie et empêcher la formation d'ondes multiples, qui pourraient interagir on préférera ne rechercher qu'une vitesse sonique et on limitera la pression relative d'alimentation des caissons 11 et des buses 10 à environ 1 bar.

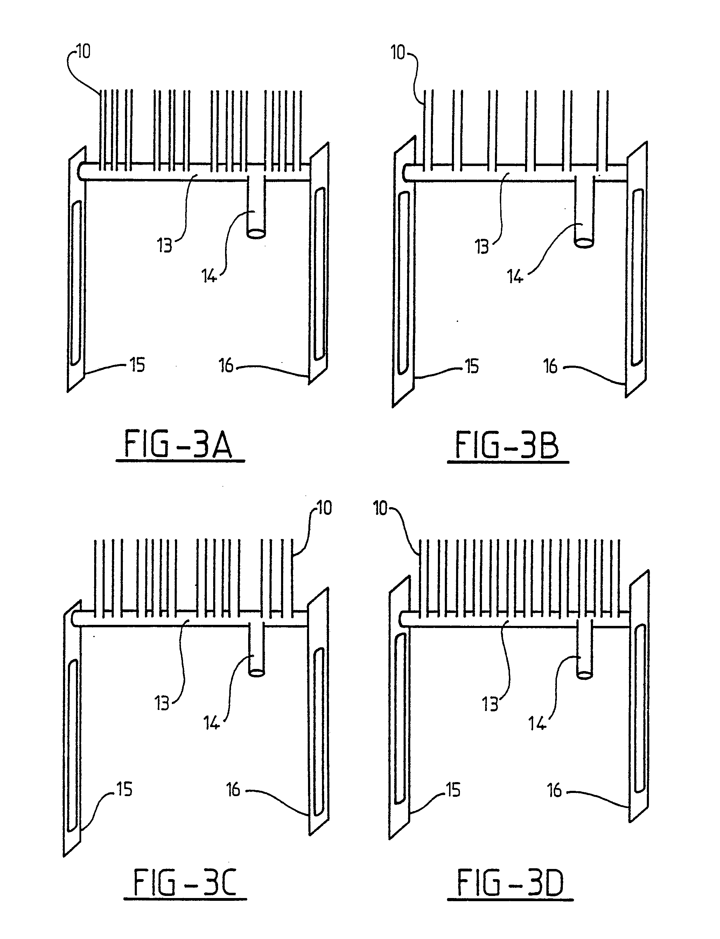

Pour faciliter le montage des buses tubulaires au poste de trempe entre les axes (5, 8) et les galets (4, 9) on les assemble comme montré fig. 3, avec des espacements déterminés, en des séries telles que 3A, 38, 3C, 3D, ayant la largeur du poste de trempe.

Des buses tubulaires sont alors piquées transversalement sur un tube 13 de plus gros diamètre, par exemple 20 mm de diamètre intérieur et 27 de diamètre extérieur, lui-même branché sur une conduite 14, ici sur la fig. 3 arrivant en regard des buses 10 sur le tube 13, mais pouvant également arriver en extrémité du tube 13. Ces conduites 14 sont reliées aux caissons 11 d'alimentation par un tuyau souple non montré.

Chaque série 3A, 3B, 3C, 3D est solidaire de deux barrettes 15 et 16, rainurées sur toute leur longueur, par lesquelles lesdites séries se fixent sur le châssis inférieur 6 ou sur le châssis supérieur 7, la distance voulue entre les nez de buses et le verre étant obtenue par coulissement de l'ensemble de la série 3A, 3B, 3C ou 3D le long des rainures. Le pas entre les différentes buses tubulaires 10 dans chaque série, donc dans la direction transversale du poste de trempe, est régulier, sauf éventuellement à certains endroits dans les séries telles que 3A et 3C destinées à être intercalées entre les galets 4, 9, où une buse tubulaire 10 est supprimée de place en place pour laisser l'espace nécessaire à un galet. Les pas entre les buses tubulaires 10, dans la direction transversale du poste de trempe ne seront en général pas inférieurs à 3 fois le diamètre du jet à l'orifice 12 de sortie à l'extrémité libre des buses. Le pas entre les buses tubulaires 10, dans la direction longitudinale est également aussi régulier que possible, compte tenu de l'impératif de loger les axes 5, 8 porteurs de galets 4, 9, et également jamais inférieur à 3 fois le diamètre du jet à l'orifice 12 de sortie.

En disposant d'un certain nombre de séries de buses tubulaires 10, telles que 3A, 3B, 3C, 3D, ayant chacune des espaces différents entre les buses, facilement accrochables sur les châssis inférieur 6 et supérieur 7 à l'aide de barrettes 15 et 18, il est possible de construire une grande variété de postes de trempe présentant des configurations différentes quant à la position et aux pas transversaux et longitudinaux des buses tubulaires de soufflage 10.

Il est même possible, en particulier pour de très faibles épaisseurs de verre, de prévoir une densité plus importante de buses au début du poste de trempe, donc une certaine disposition de buses avec des pas transversaux et longitudinaux faibles, pour créer la différence de température entre le cœur et la peau du verre, et de prévoir ensuite une autre densité de buses, moins importante, avec d'autres pas transversaux et longitudinaux, plus grands, seulement pour entretenir la différence de température entre cœur et peau créée précédemment. Ainsi on peut se permettre sur une courte distance d'augmenter le soufflage, un peu au détriment de l'évacuation, à condition, aussitôt après de prévoir une zone où la proportion de surface réservée à l'évacuation n'est pas diminuée.

En particulier dans de telles configurations, il peut être intéressant d'allonger les buses 10 pour ne pas trop pénaliser les possibilités d'échappement.

On peut même pour obtenir un refroidissement brusque très intense, au tout début du poste de trempe, remplacer tout ou partie des premières rangées transversales de buses tubulaires par des buses à fente du type ayant l'extrémité libre resserrée. Nécessairement après avoir pénalisé ainsi l'échappement sur une durée nécessairement courte de l'ordre de 0,2 à 0,5 seconde, il faut compenser en prévoyant à la suite de ces buses à fente dans la direction d'avancement du verre, des moyens de soufflage qui privilégient l'échappement, en particulier des buses tubulaires longues. Les conditions de mises en place de ces buses à fente sont les mêmes que celles des buses tubulaires, en particulier, les largeurs de fente sont identiques aux diamètres des orifices des buses tubulaires, la distance par rapport au verre est la même, les espacements des buses entre elles sont les mêmes, etc...

Avantageusement on disposera à l'entrée du poste de trempe une buse à fente, inclinée vers l'intérieur dudit poste de trempe, présentant une fente calibrée étroite, plus étroite que le corps de la buse elle-même de façon que le maximum de perte de charge sur le trajet de l'air se trouve à l'extrémité de ladite buse, alimentée de la même façon que les buses tubulaires, en gaz sous une pression autorisant des vitesses d'éjection soniques.

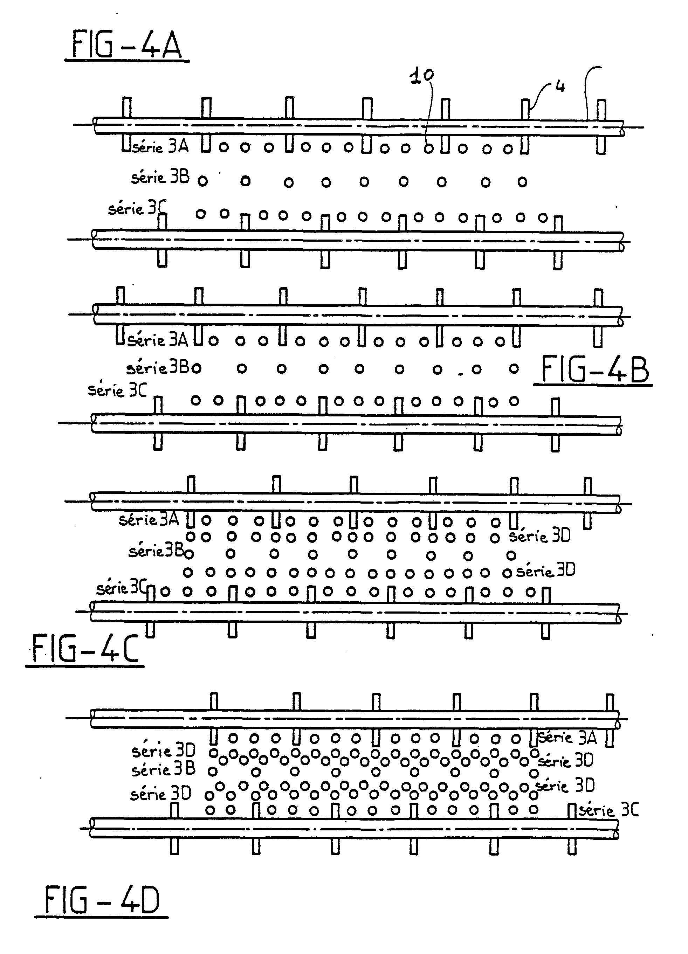

A titre d'exemple, à partir de 4 séries 3A, 3B, 3C et 3D, différents postes de trempe ont été construits, et avec eux il a été possible de tremper correctement des feuilles de verre ayant jusqu'à 1,6 mm d'épaisseur. Ces différents postes de trempe sont schématisés fig. 4A, 4B, 4C, 4D. Dans ces postes de trempe, les axes 5 et 8 porteurs de galets ont 17 mm de diamètre, les galets 4 et 9 ont 60 mm de diamètre, et sur deux axes contigus les galets sont quinconcés.

Dans une série 3A, l'espacement entre les buses est, exprimé en mm, 11, 11, 23, 11, 11, 23, ... l'intervalle de 23 mm permettant le logement d'un galet 4 ou 9 ; dans une série 3B l'espacement entre les buses est constant et égal à 22,5 mm ; dans une série 3C l'espacement est 19,5 mm, 19,5, 22, 11,5, 11,5, 22, ... ; dans une série 30 l'espacement est 11,25, 11, 11,25, 11 ... Dans le poste de trempe schématisé en 4A, les axes 5 ou 8 porteurs de galets 4 ou 9 sont disposés les uns à la suite des autres dans la direction longitudinale d'avancement des feuilles de verre avec un pas de 90 mm. Entre deux axes 5 ou deux axes 8, on dispose successivement une série 3A à 15 mm de l'axe 5 ou 8, puis à 30 mm une série 3B, puis à 30 mm une série 3C, et on retrouve à nouveau un axe 5 ou 8 à 15 mm, et à 15 mm après cet 5 axe 5 ou 8, recommence la succession des séries de buses 3A, 3B, 3C. Ce poste 4A comporte environ 19 buses par dm² de surface et par face, si bien qu'une buse intéresse environ 5 cm² de surface de verre.

Dans le poste de trempe schématisé en 4B, les axes 5 ou 8 sont distants de 120 mm et les séries 3A, 3B, 3C se succèdent avec un pas de 40 mm, si bien qu'il y a environ 15 buses par dm² de surface et par face, et que l'air provenant d'une buse touche environ 6,5 cm² de verre. Dans le poste de trempe schématisé en 4C, les axes 5 ou 8 sont toujours distants de 120 mm et les séries 3A, 3D, 3B, 3D, 3C se suivent dans cet ordre, espacées de 24 mm. Cela représente environ 27 à 28 buses par dm² de surface et par face soit une buse pour environ 3,5 cm² de verre. Dans le poste de trempe schématisé en 4D, entre deux axes 5 ou 8, deux séries 3D de plus ont été ajoutées par rapport au poste de trempe 4C. Les séries de buses se succèdent donc dans cet ordre : à 15 mm de l'axe 5 ou 8, une série 3A, puis à 15 mm les unes des autres, une série 3D, une nouvelle série 3D, une série 3B, une série 3D, une autre série 3D, une série 3C et à 15 mm de cette dernière série, on retrouve l'axe 5 ou 8 suivant. Cela représente environ 40 buses par dm² et par face, soit une buse pour 2,5 cm² de verre.

Dans tous les cas, la densité de buses est importante et supérieure à 10 au dm² et le pas entre les rangées de buses est faible et inférieur à 50 mm.

Pour tremper du verre de 2,6 mm d'épaisseur, un poste de trempe ayant la configuration 4A peut être utilisé et les buses alimentées sous une pression autorisant une vitesse sonique. Le verre réchauffé à 640 °C, défilant à une vitesse de 10 cm/s est trempé sur une longueur de poste de trempe de 450 mm soit en 4,5 secondes. Les contraintes mesurées à cœur sont de l'ordre de 730 kg/cm² et après fracture, dans un carré de 5 cm x 5 cm, on compte 366 fragments.

On constate que pour une telle installation de trempe schématisée en 4A la surface de soufflage, c'est-à-dire la surface de tous les jets d'air, à la sortie des buses, ne représente qu'environ 0,37 % de la surface totale du poste de trempe, que la surface encombrée par les galets, les axes, les buses, est de l'ordre de 40 %, si bien qu'il reste environ 60 % de la surface pour l'évacuation de l'air réchauffé au contact du verre.

Du fait de la plus grande efficacité du soufflage, dû à une plus grande vitesse de l'air, à une meilleure possibilité d'évacuation, au pas régulier entre les buses, les feuilles de verre peuvent être trempées avec des débits d'air plus faibles, de l'ordre de 80 m³/m²/mn sur chaque face du verre pour du verre de 2,6 mm d'épaisseur (ces 80 m³ étant mesurés dans des conditions normales de température et de pression).

La configuration 4B réalisée sur 450 mm de longueur avec un espace plus important entre les axes 5 ou 8 (120 mm) et un pas de 40 entre les rangées de buses, permet de tremper du verre de l'ordre de 2,9 mm d'épaisseur, défilant comme précédemment à 10 cm/s.

Pour tremper du verre plus mince, il est nécessaire d'augmenter la densité des buses, et des postes ayant la configuration 4C ou 4D deviennent alors nécessaires. On peut cependant, se contenter de cette forte densité au début du poste de trempe sur une distance d'environ 30 cm, la suite du poste de trempe n'ayant alors qu'une densité de buses plus faible. Ainsi, par exemple pour tremper du verre de 2,1 mm d'épaisseur, on disposera la configuration 4C sur 240 mm de longueur, puis la configuration 4B sur 36 cm de longueur, puis tous les 120 mm des buses classiques à fentes identiques à celles de l'art antérieur, alimentées en air à plus basse pression (485 mm CE soit 4756 Pa) pour entretenir le refroidissement.

Avec cette restriction du pas longitudinal des buses, la vitesse de 10 cm/s pourra être conservée. Pour tremper du verre de 2 mm, il est préférable d'augmenter légèrement la densité des buses et d'adopter alors la configuration 4C sur 360 mm, puis la configuration 4B sur 240 mm, un soufflage secondaire à faible pression étant encore prévu à la suite. Les feuilles de verre sont chauffées aux environs de 650 °C, on les fait défiler dans le poste de trempe entre les deux lits supérieur et inférieur de buses délivrant de l'air à vitesse sonique, dont les nez de buses sont espacés chacun d'environ 5 mm de la surface du verre, à une vitesse comprise entre 5 et 30 cm/s, par exemple 10 cm/s. Après fracture, dans un carré de 50 mm × 50 mm, on compte 322 fragments, ce qui correspond à une contrainte à cœur de l'ordre de 740 kg/cm². Dans cette dernière configuration, le pourcentage de surface encombrée par des buses, galets, etc., ... reste de l'ordre de 39 % de la surface totale, et la surface de soufflage représente de l'ordre de 0,50 %, si bien qu'il reste encore environ 60 % de la surface pour évacuer l'air soufflé.

Pour tremper du verre d'épaisseur inférieure à 2 mm, il faut avoir recours à une densité encore plus importante de buses, et il faut utiliser la configuration 4D, qui comporte de l'ordre de 40 buses par dm². Les buses sont alors rapprochées à 5 mm du verre. Elles sont disposées avec cette configuration sur 120 cm, des buses classiques à fentes alimentées avec de l'air à basse pression (485 mm CE soit 4756 Pa) étant prévues ensuite. Avec cette disposition la trempe de verre d'épaisseur de l'ordre de 1,6 mm est possible, le verre défilant à plus grande vitesse, de l'ordre de 20 cm/s.

Comme déjà dit précédemment, on peut pour obtenir une densité de soufflage importante au tout début du poste de trempe, remplacer tout ou partie des rangées transversales de buses tubulaires par des buses à fentes conformées de façon à fonctionner en vitesse sonique.

Les buses à fente ne faisant que remplacer des buses tubulaires, les conditions de distance par rapport au verre, de pas dans la direction longitudinale, etc... seront les mêmes que pour les buses tubulaires.

Dans tous les cas, donc, le débit d'air reste inférieur à 150 m³/m²/mn par face pour de l'air éjecté à vitesse sonique, le temps nécessaire pour tremper reste inférieur à 10 secondes, la vitesse V de défilement du verre est toujours comprise entre 5 cm/s et 30 cm/s, la surface pour l'échappement est supérieure à 50 % de la surface totale, et malgré la plus grande efficacité de ce soufflage, la dépense en énergie est 2,5 à 3 fois moins importante qu'avec les moyens de trempe de l'art antérieur. On constate que la vitesse de défilement du verre sous les buses de soufflage 10, reste supérieure à $P/e^2$ et voisine de $2P/e^2$ qui constitue la vitesse préférentielle, P étant le pas entre les rangées de buses et l'épaisseur du verre.

En outre, alors que dans l'art antérieur, chaque buse couvrait une surface de verre importante, environ 30 cm², dans la technique décrite ici, le nombre de buses est beaucoup plus important, supérieur à 10 et de préférence de 15 à 40 buses par dm² sur chaque face du verre, si bien que l'air émis par une buse intéresse une surface de verre beaucoup plus faible, de 2 à 7 cm².

Ces faibles débits, la plus grande efficacité de refroidissement de l'air à plus grande vitesse, la proximité des nez de buses et du verre et la forme particulière des buses qui assurent la vitesse sonique de cet air sur le verre, le faible encombrement des moyens de soufflage, la surface importante réservée à l'échappement de l'air soufflé après qu'il a frappé le verre (supérieure à 50 % de la surface totale, et généralement de l'ordre de 60 %), autorisent des performances meilleures et permettent de tremper du verre plus mince, répondant aux exigences des réglementations automobiles, ou avec plus de facilité qu'avec les techniques habituelles du verre, de 3 mm, 4 mm ou plus.

Les débits soufflés étant beaucoup plus faibles que ceux généralement soufflés dans les techniques antérieures, les surfaces réservées à l'échappement étant plus importantes, se pose beaucoup moins qu'avant, le problème de l'interaction entre les jets incidents d'air soufflé et l'air « usé » à évacuer. Cette interaction, importante dans les techniques antérieures, ne permettait pas d'obtenir la pleine efficacité des jets incidents et les difficultés d'évacuation d'air devenaient d'autant plus importantes que les feuilles de verre à tremper étaient plus grandes. Avec notre nouvelle technique, ces problèmes se posent beaucoup moins.

En outre, les dispositifs employés sont beaucoup plus simples à utiliser que les dispositifs de l'art antérieur. Les débits sont automatiquement équirépartis et une égalité de soufflage est donc automatiquement obtenue sur l'ensemble du poste de soufflage. Ainsi, lorsqu'on désire diminuer la surface du poste de trempe, par exemple diminuer sa largeur pour tremper des feuilles de verre plus étroites, on peut, pour économiser l'énergie, boucher les buses désormais inutiles, et l'équirépartition des débits et des pressions dans les buses restant en service se fait seule.

Par ailleurs, du fait de la détente adiabatique qui se produit à la sortie des buses de 10, l'air est plus froid que de l'air simplement ventilé et il a donc un pouvoir de refroidissement plus élevé.

Des postes de trempe équipés de rangées de buses disposées avec un pas constant dans la direction longitudinale d'avancement du verre, lesdites buses étant alimentées avec une pression autorisant des vitesses soniques, seront essentiellement utilisés pour tremper du verre mince.

Lorsqu'on voudra tremper du verre plus épais, de l'ordre de 4 mm d'épaisseur, on pourra se contenter d'équiper les postes actuels de trempe à plat à l'aide de buses disposées avec un pas constant dans la direction longitudinale, lesdites buses restant alimentées en air basse pression.

Jusqu'à maintenant, dans la description il n'a été question que de trempe à plat, mais il est bien évident que les solutions préconisées pour la trempe à plat, en particulier l'alimentation en air sous une pression autorisant des vitesses d'éjection soniques, l'emploi de buses conformées de façon à présenter le maximum de perte de charge rencontrée par l'air sur son trajet, à leur extrémité libre, peuvent être appliquées à la trempe verticale.

**Revendications**

1. Procédé de trempe de feuilles de verre dans lequel on souffle un gaz, notamment de l'air, par des buses sur les deux faces des feuilles de verre, caractérisé en ce que les buses sont resserrées à leur extrémité libre proche du verre avec seulement un orifice de sortie étroit, de façon que le maximum de perte de charge rencontré par le gaz sur son trajet se trouve à l'extrémité libre desdites buses.

2. Procédé selon la revendication 1, caractérisé en ce qu'on alimente les buses sous une pression qui autorise une vitesse au moins sonique du gaz à leur sortie.

3. Procédé selon l'une des revendications 1 ou 2, caractérisé en ce que les extrémités des buses sont disposées à une faible distance du verre qui n'excède pas 6 fois le diamètre ou la largeur du jet de gaz à sa sortie des buses.

4. Procédé selon l'une des revendications 1, 2 ou 3, caractérisé en ce que les buses sont disposées suivant un réseau à pas régulier faible qui n'est cependant pas inférieur à 3 fois le diamètre ou la largeur du jet de gaz à sa sortie des buses.

5. Procédé selon l'une des revendications 1 à 4, caractérisé en ce que la vitesse de défilement du verre entre les buses est supérieure à $P/e^2$ et de préférence voisine de $2P/e^2$, P étant le pas entre les buses dans la direction longitudinale d'avancement du verre et e l'épaisseur du verre.

6. Procédé selon la revendication 5, caractérisé en ce que la vitesse du verre est comprise entre 5 et 30 cm/s.

7. Procédé selon l'une des revendications précédentes caractérisé, en ce que les buses sont disposées dans la direction longitudinale d'avancement du verre suivant un réseau dont le pas est plus faible au début qu'à la fin du poste de trempe de façon à souffler plus de gaz au début du poste de trempe.

8. Procédé selon l'une des revendications précédentes, caractérisé en ce qu'on réserve sur chaque face du verre plus de 50 % de surface libre pour l'évacuation du gaz soufflé.

9. Procédé selon l'une des revendications précédentes, caractérisé en ce qu'on prévoit de 15 à 40 buses tubulaires par dm² de chaque côté du verre.

10. Procédé selon la revendication 9, caractérisé en ce qu'on remplace tout ou partie des buses tubulaires par des buses à fente ayant leur extrémité libre resserrée, alimentées de la même façon que les buses tubulaires, au tout début du poste de trempe, de sorte que le verre soit soumis au soufflage desdites buses à fente pendant un temps maximum de 0,5 seconde et en général aux alentours de 0,2 seconde.

11. Procédé selon l'une des revendications précédentes, caractérisé en ce que le débit d'air par face reste inférieur à 150 m³/m²/mn pris dans des conditions normales de température et de pression.

12. Application du procédé selon les revendications précédentes, à la trempe du verre de 2,6 mm d'épaisseur pour répondre aux exigences des réglementations en matière de vitrages automobiles, caractérisé en ce qu'on souffle de l'ordre de 80 m³/m²/mn d'air sur chaque face du verre par une pluralité de buses alimentées sous une pression d'au moins 0,91 bar (91 000 Pa) disposées en rangées espacées de 30 mm environ dans la direction longitudinale d'avancement du verre, sur une longueur de 45 cm environ, à raison d'environ 19 buses tubulaires par dm² de poste de trempe, lesdites buses débouchant à une distance du verre, de l'ordre de 5 à 8 mm, et le verre défilant à environ 10 cm/s.

13. Application du procédé selon l'une quelconque des revendications 1 à 11 précédentes à la trempe du verre de 2,1 mm d'épaisseur pour répondre aux exigences des réglementations en matière de vitrages automobiles, caractérisé en ce qu'on dispose sur chaque face du verre environ 27 buses tubulaires par dm² en rangées espacées de 24 mm dans la direction d'avancement du verre, sur environ 24 cm de longueur, puis environ 15 buses tubulaires par dm² en rangées espacées de 40 mm sur environ 36 mm de longueur, lesdites buses débouchant à une distance du verre de l'ordre de 5 à 8 mm, le verre défilant à environ 10 cm/s, et des buses à fente classiques alimentées sous une pression de 485 mm d'eau (4756 Pa) étant prévues ensuite.

14. Application du procédé selon l'une quelconque des revendications 1 à 11 à la trempe du verre de 2 mm d'épaisseur pour répondre aux exigences des réglementations en matière de vitrages automobiles, caractérisé en ce qu'on dispose sur chaque face du verre environ 27 buses tubulaires par dm² en rangées espacées de 24 mm sur environ 36 cm, puis environ 15 buses tubulaires par dm² en rangées espacées de 40 mm sur environ 24 cm, lesdites buses débouchant à 5 mm du verre, le verre défilant à 10 cm/s et des buses classiques à fente alimentées sous 485 mm CE (4 756 Pa) étant prévues ensuite.

15. Application du procédé selon l'une quelconque des revendications 1 à 11 à la trempe du verre d'épaisseur inférieure à 2 mm pour répondre aux exigences des réglementations en matière de vitrages automobiles, caractérisé en ce qu'on dispose sur chaque face du verre, environ 40 buses tubulaires par dm² en rangées espacées de 15 mm sur 120 cm de longueur, lesdites buses débouchant à 5 mm du verre, le verre défilant à 20 cm/s et des buses classiques à fente alimentées sous 485 mm CE (4 756 Pa) étant prévues ensuite.

16. Application selon l'une des revendications 12 à 15 précédentes, caractérisé en ce qu'on substitue à tout ou partie des buses tubulaires des premières rangées transversales du poste de trempe, sur une distance telle que le verre n'y soit soumis qu'au maximum 0,5 seconde, des buses à fentes à extrémité resserrée, alimentées, espacées et disposées comme les buses tubulaires qu'elles remplacent.

17. Dispositif pour tremper du verre défilant à plat entre des buses disposées au-dessus et en dessous, soufflant un gaz de refroidissement, notamment de l'air, caractérisé en ce que ces buses sont resserrées à leur extrémité libre proche du verre, avec seulement un orifice de sortie étroit de façon à présenter le maximum de perte de charge à ladite extrémité.

18. Dispositif selon la revendication 17, caractérisé en ce que les buses sont alimentées sous une pression relative au moins égale à 0,91 bar.

19. Dispositif selon l'une des revendications 17 à 19, caractérisé en ce que les orifices de buses ont un bord chanfreiné pour que le coefficient de striction avoisine 1.

20. Dispositif selon l'une des revendications 17 à 19, caractérisé en ce que l'extrémité libre des buses est située entre 5 et 15 mm du verre.

21. Dispositif selon l'une des revendications 17 à 20 caractérisé en ce qu'il subsiste au moins 50 % de surface libre réservée à l'échappement du gaz soufflé sur chaque face du verre.

22. Dispositif selon l'une des revendications 17 à 21, caractérisé en ce que les buses sont tubulaires et arrangées en un réseau à pas égal à au moins 3 fois le diamètre de l'orifice de sortie des buses.

23. Dispositif selon la revendication 22, caractérisé en ce que le pas entre les buses est inférieur à 50 mm dans la direction longitudinale, de sorte que la densité des buses est supérieure à 10 au dm² et de préférence de 15 à 40 par dm² de surface.

24. Dispositif selon l'une des revendications 17 à 23, caractérisé en ce que les buses ont une longueur au moins égale à 8 fois leur diamètre intérieur.

25. Dispositif selon l'une des revendications 17 à 24, caractérisé en ce qu'une densité importante de buses réparties dans la direction longitudinale avec un pas très faible est prévue au tout début du poste de trempe, une densité plus faible avec un pas plus grand étant prévue ensuite.

26. Dispositif selon la revendication 25, caractérisé en ce que au tout début du poste de trempe des buses tubulaires sont remplacées par des buses à fente ayant une fente de sortie resserrée, alimentées en gaz sous une pression autorisant une vitesse d'éjection sonique.

27. Dispositif selon la revendication 26, caractérisé en ce que les buses à fente sont disposées sur une longueur telle que le verre y soit soumis pendant un maximum de 0,5 seconde.

**Claims**

1. A method of tempering glass sheets in which a gas, such as air, is blown by nozzles on to the two surfaces of the glass sheet, characterised in that the nozzles are restricted at their free end adjacent the glass to only a narrow outlet orifice, so that the maximum drop of pressure of the gas during its path of travel is at the free end of said nozzles.

2. A method according to claim 1, characterised in that the nozzles are fed at a pressure which allows at least a sonic speed of the gas at their outlet.

3. A method according to claim 1 or 2, characterised in that the ends of the nozzles are arranged at a short distance from the glass which does not exceed 6 times the diameter or width of the gas jet as it leaves the nozzles.

4. A method according to any one of claims 1, 2 and 3, characterised in that the nozzles are arranged in an array at a small regular interval which is not however less than 3 times the diameter or width of the jet of gas at the outlet of the nozzles.

5. A method according to one of claims 1 to 4, characterised in that the speed of passage of the glass between the nozzles is greater than $P/1^2$ and preferably close to $2P/1^2$, P being the interval between the nozzles in the longitudinal direction of advance of the glass, and 1 the thickness of the glass.

6. A method according to claim 5, characterised in that the speed of the glass is from 5 to 30 cm/s.

7. A method according to any one of the preceding claims, characterised in that the nozzles are arranged in the longitudinal direction of advance of the glass in an array of which the interval is less at the start than at the end of the tempering station so as to blow more gas at the start of the tempering station.

8. A method according to any one of the preceding claims, characterised in that on each surface of the glass more than 50 % of the free surface is reserved for evacuation of blown gas.

9. A method according to any one of the preceding claims, characterised in that from 15 to 40 tubular nozzles per dm² are provided on each side of the glass.

10. A method according to claim 9, characterised in that all or part of the tubular nozzles are replaced by slot nozzles having their free ends restricted, fed similarly to the tubular nozzles, at the start of the tempering station, so that the glass is subjected to blowing from said slot nozzles for a maximum time of 0.5 second and, in general, of about 0.2 second.

11. A method according to any one of the preceding claims, characterised in that the feed of air for each surface is less than 150 m³/m²/min measured at normal temperature and pressure.

12. Application of a method according to any preceding claim, to tempering of glass 2.6 mm thick to meet statutory requirements for materials for automobile windows, characterised in that of the order of 80 m³/m²/min of air is blown on to each surface of the glass by a plurality of nozzles fed at a pressure of at least 0.91 bar (91,000 Pa) arranged in lines spaced by about 30 mm in the longitudinal direction of advance of the glass, over a length of about 45 cm, in a number of about 19 tubular nozzles per dm² of the tempering station, said nozzles opening at a distance from the glass of the order of 5 to 8 mm, and the glass moving at about 10 cm/s.

13. Application of a method according to any one of claims 1 to 11, to tempering of glass 2.1 mm thick to meet statutory requirements for materials for automobile windows, characterised in that on each surface of the glass there are provided about 27 tubular nozzles per dm² in lines spaced by 24 mm in the direction of advance of the glass, over a length of about 24 cm, then about 15 tubular nozzles per dm² in lines spaced by 40 mm over a length of about 36 mm, said nozzles opening at a distance from the glass of the order of 5 to 8 mm, the glass moving at about 10 cm/s, and conventional slot nozzles fed at a pressure of 485 mm of water gauge (4 756 Pa) then being provided.

14. Application of a method according to any one of claims 1 to 11, to tempering of glass 2 mm thick to meet statutory requirements of material for automobile windows, characterised in that on each surface of the glass there are provided about 27 tubular nozzles per dm² in lines spaced by 24 mm over about 36 cm, then about 15 tubular nozzles per dm² in lines spaced by 40 mm over about 24 cm, said nozzles opening at 5 mm from the glass, the glass moving at 10 cm/s, and conventional slot nozzles fed at 485 mm of water gauge (4 756 Pa) then being provided.

15. Application of a method according to any one of claims 1 to 11, to tempering of glass having a thickness less than 2 mm to meet statutory requirements for material for automobile windows, characterised in that on each surface of the glass there are provided about 40 tubular nozzles per dm² in lines spaced by 15 mm over a length of 120 cm, said nozzles opening at 5 mm from the glass, the glass moving at 20 cm/s, and conventional slot nozzles fed at 485 mm water gauge (4756 Pa) then being provided.

16. Application of a method according to any one of claims 12 to 15, characterised in that all or part of the tubular nozzles of the first transverse lines of the tempering station, over a distance such that the glass is affected by them for not more than 0.5 second, are replaced by slot nozzles having restricted outlets which are fed, spaced and arranged in the same way as the tubular nozzles which they replace.

17. A device for tempering glass moving between nozzles arranged above and below it blowing a cooling gas, such as air, characterised in that the nozzles are restricted at their free end adjacent the glass to only a narrow outlet orifice so as to give the maximum drop in pressure at said end.

18. A device according to claim 17, characterised in that the nozzles are fed at a gauge pressure of at least 0.91 bar.

19. A device according to one of claims 17 and 18, characterised in that the nozzle orifices have a chamfered edge to give a constriction coefficient close to 1.

20. A device according to any one of claims 17 to 19, characterised in that the free end of the nozzles is positioned from 5 to 15 mm from the glass.

21. A device according to one of claims 17 to 20, characterised in that at least 50 % of the free surface area is reserved for escape of blown gas on each surface of the glass.

22. A device according to one of claims 17 to 21, characterised in that the nozzles are tubular and arranged in an array having an interval of at least 3 times the diameter of the outlet orifice of the nozzles.

23. A device according to claim 22, characterised in that the interval between the nozzles is less than 50 mm in the longitudinal direction, so that the density of the nozzles is greater than $10/dm^2$ and preferably from 15 to 40 per $dm^2$ of surface area.

24. A device according to one of claims 17 to 23, characterised in that the nozzles have a length of at least 8 times their interior diameter.

25. A device according to one of claims 17 to 24, characterised in that a high density of nozzles distributed in the longitudinal direction at very small intervals is provided at the start of the tempering station, a lower density with a longer interval then being provided.

26. A device according to claim 25, characterised in that at the start of the tempering station the tubular nozzles are replaced by slot nozzles having a restricted outlet slot, fed with gas under a pressure allowing a sonic speed of discharge.

27. A device according to claim 26, characterised in that the slot nozzles are arranged over a length such that the glass is affected by them for not more than 0.5 second.

## Patentansprüche

1. Verfahren zum Vorspannen von Glasscheiben, bei dem man ein Gas, insbesondere Luft, mit Düsen über die beiden Seiten der Glasscheiben blast, dadurch gekennzeichnet, daß die Düsen an ihrem freien Endstück nahe dem Glas durch eine Öffnung mit engem Ausgang derart verengt sind, daß das Maximum des Druckverlustes, den das Gas auf seinem Weg erleidet, an dem freien Endstück der genannten Düsen auftritt.

2. Verfahren nach Anspruch 1, dadurch gekennzeichnet, daß die Zufuhr zu den Düsen unter einem Druck erfolgt, der mindestens Schallgeschwindigkeit des Gases am Düsenausgang zuläßt.

3. Verfahren nach einem der Ansprüche 1 oder 2, dadurch gekennzeichnet, daß die Endstücke der Düsen in einem geringen Abstand vom Glas angeordnet sind, der das 6-fache des Durchmessers oder der Breite des Gasstrahles am Ausgang der Düsen nicht übersteigt.

4. Verfahren nach einem der Ansprüche 1, 2 oder 3, dadurch gekennzeichnet, daß die Düsen in einem Gitter mit gleichmäßig geringem Abstand angeordnet sind, der jedoch nicht geringer ist als das 3-fache des Durchmessers oder der Weite des Gasstrahls am Ausgang der Düsen.

5. Verfahren nach einem der Ansprüche 1 bis 4, dadurch gekennzeichnet, daß die Durchlaufgeschwindigkeit des Glases zwischen den Dusen größer ist als $P/e^2$ und vorzugsweise bei $2P/e^2$ liegt, wobei P der Abstand der Düsen in Richtung der Längsbewegung des Glases ist und e die Dicke des Glases.

6. Verfahren nach Anspruch 5, dadurch gekennzeichnet, daß die Glasgeschwindigkeit zwischen 5 und 30 cm/s liegt.

7. Verfahren nach einem der vorhergehenden Ansprüche, dadurch gekennzeichnet, daß die Düsen in Richtung der Längsbewegung des Glases in Form eines Netzes angeordnet sind, wobei der Abstand am Anfang geringer ist als am Ende der Vorrichtung zum Vorspannen, so daß am Anfang der genannten Vorrichtung mehr Gas geblasen wird.

8. Verfahren nach einem der vorhergehenden Ansprüche, dadurch gekennzeichnet, daß man auf jeder Seite des Glases mehr als 50 % freie Fläche reserviert hat, um das geblasene Gas abzuziehen.

9. Verfahren nach einem der vorhergehenden Ansprüche, dadurch gekennzeichnet, daß man 15 bis 40 rohrförmige Düsen pro $dm^2$ auf jeder Seite des Glases vorgesehen hat.

10. Verfahren nach Anspruch 9, dadurch gekennzeichnet, daß man ganz am Anfang der Vorrichtung zum Vorspannen die rohrförmigen Düsen völlig oder teilweise durch Spaltdüsen mit verengtem freien Endstück ersetzt, denen in gleicher Weise zugeführt wird, wie den rohrförmigen Düsen, so daß das Glas während einer Zeit von maximal 0,5 Sekunde und allgemein von etwa 0,2 Sekunde durch die Düsen mit Schlitz angeblasen wird.

11. Verfahren nach einem der vorhergehenden Ansprüche, dadurch gekennzeichnet, daß unter den Normalbedingungen der Temperatur und des Druckes weniger als 150 $m^3$ Luft pro $m^2$ der

Glasfläche pro min benutzt werden.

12. Anwendung des Verfahrens nach den vorhergehenden Ansprüchen auf das Vorspannen von Glas mit einer Dicke von 2,6 mm, um die Forderungen der Vorschriften für Autoverglasungen zu erfüllen, dadurch gekennzeichnet, daß man in der Größenordnung von 80 m³/m²/min Luft mit einer Vielzahl von Düsen auf jede Seite des Glases bläst, wobei das Gas den Düsen mit einem Druck von mindestens 0,91 bar (91000 Pa) zugeführt wird und die Düsen in einem Abstand von etwa 30 mm in Richtung der Längsbewegung des Glases über eine Länge von etwa 45 cm angeordnet sind, so daß etwa 19 rohrförmige Düsen pro dm² der Stelle zum Vorspannen vorhanden sind, die Düsen einen Abstand in der Größenordnung von 5 bis 8 mm vom Glas haben und das Glas sich mit einer Geschwindigkeit von etwa 10 cm/s bewegt.

13. Anwendung des Verfahrens nach irgendeinem der vorhergehenden Ansprüche 1 bis 11, zum Vorspannen von Glas mit einer Dicke von 2,1 mm, um die Forderungen der Vorschriften für Automobilverglasungen zu erfüllen, dadurch gekennzeichnet, daß man auf jeder Seite des Glases etwa 27 rohrförmige Düsen pro dm² im Abstand von 24 mm in Bewegungsrichtung des Glases auf eine Länge von etwa 24 cm, dann etwa 15 rohrförmige Düsen pro dm² in einem Abstand von 40 mm auf eine Länge von etwa 36 mm anordnet, wobei die genannten Düsen einen Abstand in der Größenordnung von 5 bis 8 mm vom Glas haben, das Glas sich mit einer Geschwindigkeit von etwa 10 cm/s bewegt und anschließend klassische Spaltdüsen vorgesehen sind, die unter einem Druck von 485 mm Wassersäule (4 756 Pa) versorgt werden.

14. Anwendung des Verfahrens nach irgendeinem der Ansprüche 1 bis 11 zum Vorspannen von Glas mit 2 mm Dicke, um die Forderungen der Vorschriften für Automobilverglasungen zu erfüllen, dadurch gekennzeichnet, daß man auf jeder Seite des Glases etwa 27 rohrförmige Düsen pro dm² in einem Abstand von 24 mm auf eine Länge von etwa 36 cm, dann etwa 15 rohrförmige Düsen pro dm² in einem Abstand von 40 mm auf eine Länge von 24 cm anordnet, die genannten Düsen einen Abstand von 5 mm vom Glas haben, das Glas mit einer Geschwindigkeit von 10 cm/s bewegt wird und anschließend klassische Spaltdüsen vorgesehen sind, die unter einem Druck von 485 mm CE (4756 Pa) versorgt werden.

15. Anwendung des Verfahrens nach irgendeinem der Ansprüche 1 bis 11 zum Vorspannen von Glas mit einer Dicke von weniger als 2 mm, um die Forderungen der Vorschriften für Automobilverglasungen zu erfüllen, dadurch gekennzeichnet, daß man auf jeder Seite des Glases etwa 40 rohrförmige Düsen pro dm² in einem Abstand von 15 mm auf eine Länge von 120 cm anordnet, wobei die genannten Düsen einen Abstand von 5 mm vom Glas haben, das Glas sich mit einer Geschwindigkeit von 20 cm/s bewegt und danach klassische Spaltdüsen vorgesehen sind, die unter einem Druck von 485 mm CE (4756 Pa) versorgt werden.

16. Anwendung nach einem der vorhergehenden Ansprüche 12 bis 15, dadurch gekennzeichnet, daß man auf einer Distanz, der das Glas maximal 0,5 Sekunde ausgesetzt ist, die rohrförmigen Düsen, die zuerst quer auf der Vorrichtung zum Vorspannen angeordnet sind, völlig oder teilweise durch Spaltdüsen mit verengtem Endstück ersetzt, die wie die rohrförmigen Düsen, die sie ersetzen, versorgt, beabstandet und angeordnet sind.

17. Vorrichtung zum Vorspannen von Glas, das sich als Platte zwischen Düsen bewegt, die darüber und darunter angeordnet sind und ein Kühlgas, insbesondere Luft, bläst, dadurch gekennzeichnet, daß die Düsen an ihrem freien Endstück nahe dem Glas durch eine Öffnung mit engem Ausgang derart verengt sind, daß das Maximum des Druckabfalls an diesem Endstück auftritt.

18. Vorrichtung nach Anspruch 17, dadurch gekennzeichnet, daß die Zufuhr zu den Düsen unter einem relativen Druck von mindestens 0,91 bar erfolgt.

19. Vorrichtung nach einem der Ansprüche 17 oder 18, dadurch gekennzeichnet, daß die Öffnungen der Düsen einen abgeschrägten Rand aufweisen, damit der Striktionskoeffizient bei etwa 1 liegt.

20. Vorrichtung nach einem der Ansprüche 17 bis 19, dadurch gekennzeichnet, daß das freie Endstück der Düsen zwischen 5 und 15 mm vom Glas entfernt angeordnet ist.

21. Vorrichtung nach einem der Ansprüche 17 bis 20, dadurch gekennzeichnet, daß auf jeder Seite des Glases mindestens 50 % freie Oberfläche zum Entweichen des geblasenen Gases vorhanden sind.

22. Vorrichtung nach einem der Ansprüche 17 bis 21, dadurch gekennzeichnet, daß die Düsen rohrförmig sind und in einem Netz mit gleichem Abstand von mindestens dem 3-fachen Durchmesser der Öffnung am Ausgang der Düsen angeordnet sind.

23. Vorrichtung nach Anspruch 22, dadurch gekennzeichnet, daß der Abstand zwischen den Düsen weniger als 50 mm in Längsrichtung beträgt, derart daß die Dichte der Düsen größer als 10 pro dm² und vorzugsweise 15 bis 40 pro dm² der Oberfläche beträgt.

24. Vorrichtung nach einem der Ansprüche 17 bis 23, dadurch gekennzeichnet, daß die Düsen eine Länge von mindestens dem 8-fachen ihres inneren Durchmessers haben.

25. Vorrichtung nach einem der Ansprüche 17 bis 24, dadurch gekennzeichnet, daß eine wesentliche Dichte der in Längsrichtung verteilten Düsen mit einem sehr geringen Abstand ganz am Anfang der Stelle zum Vorspannen und eine geringere Dichte mit einem größeren Abstand anschließend vorgesehen sind.

26. Vorrichtung nach Anspruch 25, dadurch gekennzeichnet, daß die rohrförmigen Düsen ganz am Anfang der Stelle zum Vorspannen durch Spaltdüsen mit einem verengten Spaltausgang ersetzt sind, der das Ausstoßen mit Schallgeschwindigkeit gestattet.

27. Vorrichtung nach Anspruch 26, dadurch gekennzeichnet, daß die Spaltdüsen über eine Länge angeordnet sind, daß das Glas ihnen maximal 0,5 Sekunde lang ausgesetzt ist.

FIG -1

FIG -2

FIG-3A

FIG-3B

FIG-3C

FIG-3D

FIG-4A

série 3A
série 3B
série 3C

série 3A
série 3B          FIG-4B
série 3C

série 3A          série 3D
série 3B          série 3D
série 3C

FIG-4C

série 3D          série 3A
série 3B          série 3D
série 3D          série 3D
                  série 3C

FIG-4D